# EUROPEAN PATENT SPECIFICATION

(11) **EP 4 124 120 B1**
(45) Date of publication and mention of the grant of the patent: **09.07.2025**
(21) Application number: 22168264.4
(22) Date of filing: 13.04.2022
(51) Int. Cl.: H04W 40/24, H04W 24/02, H04W 88/08, H04W 92/04

(54) **COMMUNICATION SYSTEM, COMMUNICATION PROCESS DEVICE, AND DEVICE ADDITION METHOD**
KOMMUNIKATIONSSYSTEM, KOMMUNIKATIONSVERFAHREN
SYSTÈME DE COMMUNICATION, DISPOSITIF DE PROCESSUS DE COMMUNICATION

(30) Priority: 20.07.2021 JP 2021119621
(43) Date of publication of application: 25.01.2023
(73) Proprietor: FUJITSU LIMITED, Kawasaki-shi, Kanagawa 211-8588 (JP)
(72) Inventor: OGAWA, Koji, Kanagawa, 211-8588 (JP); WATANABE, Teruyoshi, Kanagawa, 211-8588 (JP); ITO, Yuzo, Kanagawa, 211-8588 (JP); OTSUKA, Yasunori, Kanagawa, 211-8588 (JP)
(74) Representative: Haseltine Lake Kempner LLP

(56) References cited:
- US-A1- 2019 245 740
- US-A1- 2021 051 569
- "O-RAN", no. ; 20181001, 16 September 2019 (2019-09-16), XP051779936, Retrieved from the Internet <URL:http://www.3gpp.org/ftp/Meetings_3GPP_SYNC/SA/Docs/SP-190876.zip> [retrieved on 20190916]

## Description

### FIELD

The embodiment discussed herein is related to a communication system, a communication process device.

### BACKGROUND

In recent years, for example, with the development of Internet of Things (IoT) services, communication systems increasingly cope with services having various requirements. Thus, in the communication standard for the fifth generation mobile communication (5G or New Radio (NR)), in addition to the standard technology of the fourth generation mobile communication (4G), there is a demand for a technology that implements higher-data-rate, higher-capacity, and lower-latency communication.

In the communication systems including 5G, various communication devices provided by different vendors are used and, in recent years, open interfaces common to these communication devices are studied. Specifically, for example, an industry group called the open radio access network alliance (O-RAN alliance) founded in 2018 is trying to design interfaces interoperable among communication devices provided by different vendors.
Patent Document 1: International Publication Pamphlet No. WO 2019/035434

However, even if the interface is in conform to the standard specifications, such as the O-RAN architecture, interconnection of communication devices is not guaranteed, and thus, there is a problem in that the cost needed to construct a communication system is increased.

Specifically, functions installed in communication devices and profiles used by each of the vendors are different for each vendor, even if devices are connected by interfaces that are in conform to the standard specifications, the communication system constructed by these devices are not always correctly operated. Accordingly, for example, in the case of further adding a new device to the communication system, there is a need to perform an operation process for verifying the connections between the existing devices and the device to be added, and the cost for adding the device is increased.

In particular, if a base station included in a communication system is structured by nodes, such as a central unit (CU), a distributed unit (DU), and a remote unit (RU), the cost needed at the time at which each of the vendors adds a different node is increased. Furthermore, in the future, for example, if virtualization of a network, such as a software base station, Network Slicing, Radio Access Network (RAN) sharing, or the like are developed, interconnection among the devices becomes an issue, a huge cost may possibly be needed to construct the communication systems among different vendors.

Accordingly, the present invention has been conceived in light of the circumstances described above and an object thereof is to provide a communication system, a communication process device, and a device addition method that are able to reduce the cost at the time of connecting devices.
Reference may be made to any of:
US 2021/051569 A1, which relates to system information delivery enhancements, wherein a gNB-DU indicates to a second node a capability information element for generating information related to OSI, receives an acknowledge indication from the second node, and generates system information broadcast information to a UE; and
US 2019/245740 A1, which relates to a system, method, and interfaces for Radio Access Networks and Cloud Radio Access Networks.

### SUMMARY

The invention is defined by the independent claims, to which reference should now be made. Specific embodiments are defined in the dependent claims.

### BRIEF DESCRIPTION OF DRAWINGS

FIG. 1 is a diagram illustrating a configuration example of a communication system;
FIG. 2 is a block diagram illustrating a configuration of a CU and a DU according to one embodiment;
FIG. 3 is a block diagram illustrating a configuration of the DU and a RU according to one embodiment;
FIG. 4 is a sequence diagram illustrating a device addition method; and
FIG. 5 is another sequence diagram illustrating the device addition method.

### DESCRIPTION OF EMBODIMENTS

Preferred embodiments of the present invention will be explained with reference to accompanying drawings. Furthermore, the present invention is not limited to the embodiments.

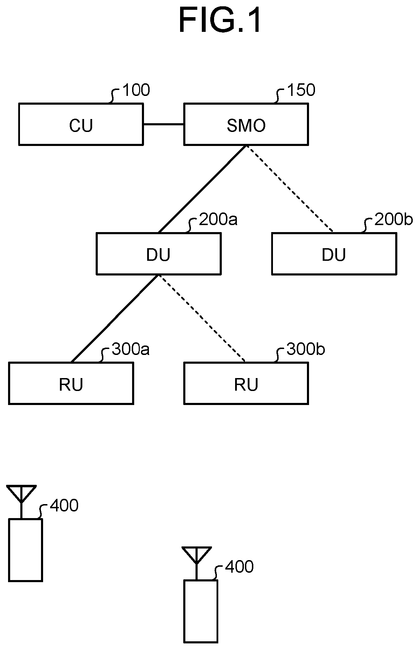

FIG. 1 is a diagram illustrating a configuration example of a communication system according to one embodiment. The communication system illustrated in FIG. 1 includes a central unit (CU) 100, a distributed unit (DU) 200a, a remote unit (RU) 300a, and a terminal device 400.

The CU 100 is connected to a core network (not illustrated), and sends and receives data to and from the DU 200a that is connected to the lower level. Furthermore, the CU 100 sends and receives, via a service management and orchestration (SMO) 150, a signal used for maintenance management to and from the DU 200a that is located at the lower level. It is possible to newly connect a DU 200b to the CU 100 in addition to the DU 200a. In other words, it is possible to add the DU 200b at the lower level of the CU 100.

The DU 200a sends and receives data to and from the CU 100 that is connected to the upper level, and also sends and receives data to and from the RU 300a that is connected to the lower level. It is possible to newly connect a RU 300b to the DU 200a in addition to the RU 300a. In other words, it is possible to add the RU 300b at the lower level of the DU 200a.

The RU 300a sends and receives data to and from the DU 200a that is connected to the upper level, and performs wireless communication between the terminal device 400 that is present in a cell formed by the own unit.

In this way, in the communication system, the CU 100, the DU 200a, and the RU 300a constitutes a base station that performs wireless communication with the terminal device 400. In other words, the base station included in the communication system according to the present embodiment is constituted from a plurality of nodes. Furthermore, in the present embodiment, the device located on the side closer to the core network is sometimes referred to an "upper level node", and the device located on the side away from the core network is sometimes referred to as a "lower level node". In other words, for example, the CU 100 is an upper level node of the DU 200a, whereas the DU 200a is a lower level node of the CU 100. Similarly, for example, the DU 200a is an upper level node of the RU 300a, whereas the RU 300a is a lower level node of the DU 200a.

In the present embodiment, at the time at which a lower level node is newly added to an upper level node, the lower level node transmits function identification information that indicates the own functions to the upper level node. Then, the upper level node enables or disables the own function and a function of the lower level node on the basis of the function identification information that is received from the lower level node, and also, conducts a test related to the enabled function. In other words, at the time at which the lower level node is added, the connection between the upper level node and the lower level node is automatically verified on the basis of the function identification information related to the lower level node. The device addition method will be described in detail later.

The terminal device 400 performs wireless communication with a nearby RU. In other words, if the terminal device 400 is present in the cell formed by the RU 300a, the terminal device 400 performs wireless communication with the RU 300a.

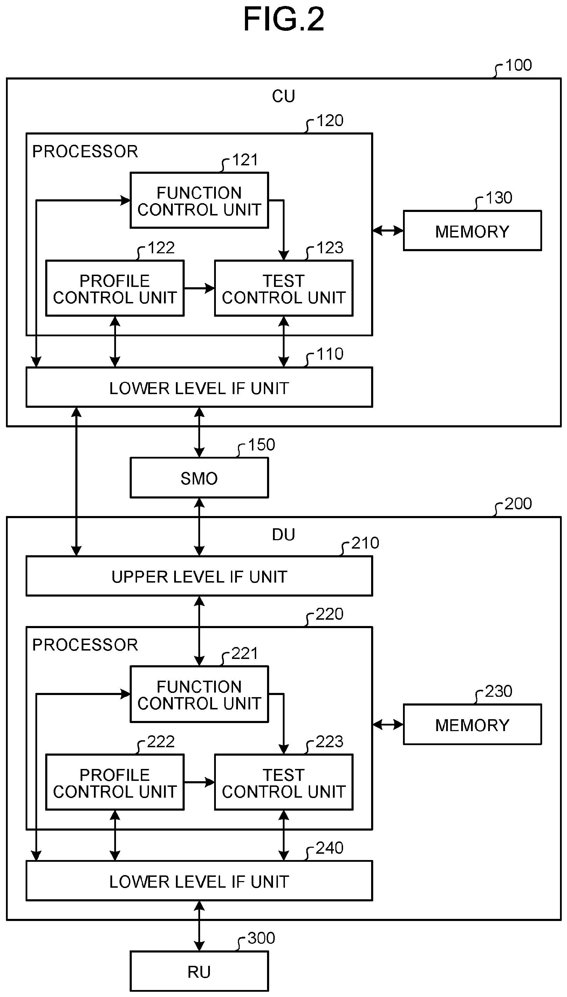

FIG. 2 is a block diagram illustrating a configuration of the CU 100 and the DU 200 according to one embodiment. In FIG. 2, the CU 100 is the upper level node of the DU 200. Furthermore, the DU 200 is the lower level node of the CU 100 and has the same configuration as that of each of the DUs 200a and 200b illustrated in FIG. 1.

The CU 100 illustrated in FIG. 2 includes a lower level interface unit (hereinafter, simply referred to as a "lower level IF unit") 110, a processor 120, and a memory 130.

The lower level IF unit 110 is an interface for connecting to the DU 200 that is the lower level node. The lower level IF unit 110 is connected to the DU 200 by using the O1 interface via, for example, the F1AP interface and the SMO 150. Then, at the time at which the DU 200 that is the lower level node is newly connected, the lower level IF unit 110 receives the function identification information that indicates the functions installed in the DU 200 from the DU 200. At this time, the lower level IF unit 110 receives, together with the function identification information, verification completion information that indicates a test item in which verification related to the DU 200 has already been completed and profile information that indicates a version of a profile handled by the DU 200. Furthermore, the lower level IF unit 110 transmits various kinds of information to the DU 200 in accordance with an instruction received from the processor 120.

The processor 120 includes, for example, a central processing unit (CPU), a field programmable gate array (FPGA), a digital signal processor (DSP), or the like, and performs overall control of the CU 100. Specifically, the processor 120 includes a function control unit 121, a profile control unit 122, and a test control unit 123.

The function control unit 121 acquires the function identification information transmitted from the DU 200, and enables or disables the function of the DU 200 on the basis of the function identification information. Specifically, the function control unit 121 compares the functions of the CU 100 to the functions of the DU 200, and decides to enable the function supported by both of the nodes. Furthermore, the function control unit 121 decides to disable the function that is not supported by the CU 100 out of the functions of the DU 200. Then, the function control unit 121 instructs the DU 200 to enable or disable the function.

The profile control unit 122 acquires the profile information transmitted from the DU 200, and determines whether or not a change of the profile is needed. Specifically, the profile control unit 122 compares the version of the profile of the CU 100 to the version of the profile of the DU 200, and determines that, if the versions of the profiles of both of the nodes match, a change of the profile is not needed. Furthermore, if the version of the profile of the DU 200 is the version in which backward compatibility with respect to the profile of the CU 100 is guaranteed, the profile control unit 122 determines that a change of the profile is not needed.

In contrast, if the version of the profile of the DU 200 is the version in which backward compatibility with respect to the profile of the CU 100 is not guaranteed, the profile control unit 122 determines that a change of the profile of the DU 200 or the CU 100 is needed. Then, if it is determined that a change of the profile is needed, the profile control unit 122 instructs the DU 200 to update the profile, or, updates the profile of the CU 100. Furthermore, if the profile control unit 122 updates the profile of the CU 100, the profile control unit 122 also instructs, as needed, the other DU 200 that has already connected to the CU 100 to update the profile. Furthermore, the profile control unit 122 may also adjust, for each test item as needed, a set value of the profile of each of the CU 100 and the DU 200.

The test control unit 123 selects at least a test item used for verifying the function that has been enabled by the function control unit 121, and then, conducts a test related to the selected test item. Specifically, on the basis of the verification completion information transmitted from the DU 200, the test control unit 123 selects the test item in which verification has not been completed out of the test items used for verifying the functions to be enabled in the DU 200. At this time, regarding the test item that is likely to be operated under the condition that is different from that used at the time of the conducted test even regarding the test item in which verification has been completed, the test control unit 123 selects the test item as an item to be conducted. Furthermore, as the test item used for verifying the function, for example, a test item of O-RAN Inter-Operability Test (IOT), a test item of a conformance test provided by a predetermined certification authority, or the like may be used.

After the test control unit 123 selects at least a test item, if compatibility of the profile of each of the CU 100 and the DU 200 is guaranteed by the profile control unit 122, the test control unit 123 conducts a test related to the selected test item. In other words, the test control unit 123 conducts, for each selected test item, a needed operation test including transmission and reception of the signal between the CU 100 and the DU 200, and verifies whether or not the function that is to be enabled in the DU 200 is normally performed.

The memory 130 includes, for example, a random access memory (RAM), a read only memory (ROM), or the like, and stores information that is used for a process performed by the processor 120.

The DU 200 illustrated in FIG. 2 includes an upper level interface unit (hereinafter, simply referred to as an "upper level IF unit") 210, a processor 220, a memory 230, and a lower level IF unit 240.

The upper level IF unit 210 is an interface for connecting to the CU 100 that is the upper level node. The upper level IF unit 210 is connected to the CU 100 by the O1 interface via, for example, the F1AP interface and the SMO 150. Then, at the time at which the DU 200 is newly connected to the CU 100 that is the upper level node, the upper level IF unit 210 transmits the function identification information that indicates the functions installed in the DU 200 to the CU 100. At this time, the upper level IF unit 210 transmits, together with the function identification information, the verification completion information that indicates the test item in which verification related to the DU 200 has already been completed and the profile information that indicates the version of the profile handled by the DU 200. Furthermore, the upper level IF unit 210 receives various kinds of information from the CU 100.

The processor 220 includes, for example, a CPU, an FPGA, a DSP, or the like, and performs overall control of the DU 200. Specifically, the processor 220 includes a function control unit 221, a profile control unit 222, and a test control unit 223.

If the DU 200 is connected to the CU 100 that is the upper level node, the function control unit 221 reads the function identification information, the verification completion information, and the profile information related to the DU 200 from the memory 230, and transmits the read information to the CU 100 from the upper level IF unit 210. Furthermore, if the function control unit 221 receives an instruction to enable or disable the function from the CU 100, the function control unit 221 enables or disables the function of the DU 200 in accordance with the instruction.

When an RU 300 that is the lower level node is newly connected, the function control unit 221 acquires the function identification information transmitted from the RU 300, and enables or disables the function of the RU 300 on the basis of the function identification information. Specifically, the function control unit 221 compares the functions of the DU 200 to the functions of the RU 300, and decides to enable the function supported by both of the nodes. Furthermore, the function control unit 221 decides to disable the function that is not supported by the DU 200 out of the functions of the RU 300. Then, the function control unit 221 instructs the RU 300 to enable or disable the function.

If the profile control unit 222 receives an instruction to update the profile from the CU 100, the profile control unit 222 updates the profile of the DU 200 in accordance with the instruction.

Furthermore, at the time at which the RU 300 that is the lower level node is newly connected, the profile control unit 222 acquires the profile information transmitted from the RU 300, and determines whether or not a change of the profile is needed. Specifically, the profile control unit 222 compares the version of the profile of the DU 200 to the version of the profile of the RU 300, and determines that, if the versions of the profiles of both of the nodes match, a change of the profile is not needed. Furthermore, if the version of the profile of the RU 300 is the version in which backward compatibility with respect to the profile of the DU 200 is guaranteed, the profile control unit 222 determines that a change of the profile is not needed.

In contrast, if the version of the profile of the RU 300 is the version in which backward compatibility with respect to the profile of the DU 200 is not guaranteed, the profile control unit 222 determines that a change of the profile of the RU 300 or the DU 200 is needed. Then, if it is determined that a change of the profile is needed, the profile control unit 222 instructs the RU 300 to update the profile, or, updates the profile of the DU 200. Furthermore, if the profile control unit 222 updates the profile of the DU 200, the profile control unit 222 also instructs, as needed, the other RU 300 that is already connected to the DU 200 and the CU 100 that is the upper level node to update the profile. Furthermore, the profile control unit 222 may also adjust, for each test item as needed, a set value of the profile of each of the DU 200 and the RU 300.

The test control unit 223 conducts an operation test in accordance with an instruction received from the CU 100 at the time of conducting the test related to the function of the DU 200 to be enabled. Furthermore, after the test related to the function of the DU 200 is conducted, if information indicating that it has been confirmed that the function is normally performed is notified from the CU 100, the test control unit 223 causes the memory 230 to store information indicating that verification of the test item related to the subject function has been completed as the verification completion information.

The test control unit 223 selects at least a test item used for verifying the function that has been enabled by the function control unit 221 at the time at which the RU 300 that is the lower level node is newly connected, and conducts the test related to the selected test item. Specifically, the test control unit 223 selects, on the basis of the verification completion information transmitted from the RU 300, the test item in which verification has not been completed out of the test items used for verifying the functions to be enabled in the RU 300. At this time, regarding the test item that is likely to be operated under the condition that is different from that used at the time of the conducted test even regarding the test item in which verification has been completed, the test control unit 223 selects the test item as an item to be conducted.

After the test control unit 223 selects at least a test item, if compatibility of the profile of each of the DU 200 and the RU 300 is guaranteed by the profile control unit 222, the test control unit 223 conducts a test related to the selected test item. In other words, the test control unit 223 conducts, for each selected test item, a needed operation test including transmission and reception of the signal between the DU 200 and the RU 300, and verifies whether or not the function that is to be enabled in the RU 300 is normally performed.

The memory 230 includes, for example, a RAM, a ROM, or the like, and stores information that is used for a process performed by the processor 220.

The lower level IF unit 240 is an interface for connecting to the RU 300 that is the lower level node. The lower level IF unit 240 is connected to the RU 300 by an interface of, for example, the management plane (M-Plane). Then, at the time at which the RU 300 that is the lower level node is newly connected, the lower level IF unit 240 receives the function identification information that indicates the function to be installed in the RU 300 from the RU 300. At this time, the lower level IF unit 240 receives, together with the function identification information, the verification completion information that indicates the test item in which verification related to the RU 300 has already been completed and the profile information that indicates the version of the profile handled by the RU 300. Furthermore, the lower level IF unit 240 transmits various kinds of information to the RU 300 in accordance with an instruction from the processor 220.

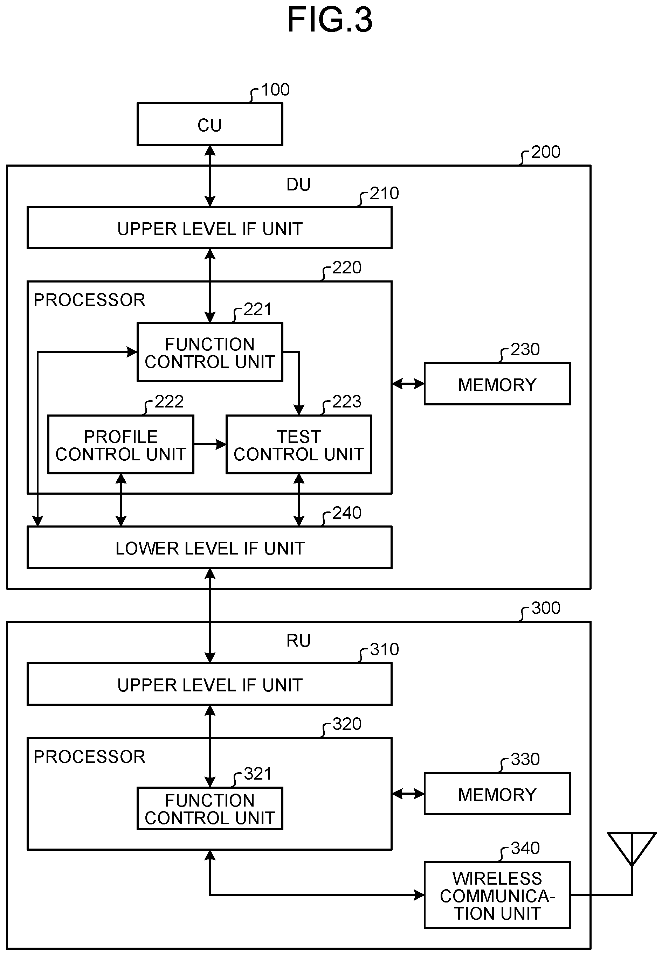

FIG. 3 is a block diagram illustrating a configuration of the DU 200 and the RU 300 according to one embodiment. In FIG. 3, the DU 200 is an upper level node of the RU 300. Furthermore, the RU 300 is a lower level node of the DU 200 and has the same configuration as that of each of the RUs 300a and 300b illustrated in FIG. 1. The DU 200 illustrated in FIG. 3 has the same configuration as that illustrated in FIG. 2; therefore, a description thereof will be omitted.

The RU 300 illustrated in FIG. 3 includes an upper level IF unit 310, a processor 320, a memory 330, and a wireless communication unit 340.

The upper level IF unit 310 is an interface for connecting to the DU 200 that is the upper level node. The upper level IF unit 310 is connected to the DU 200 by, for example, the M-Plane interface. Then, at the time at which the RU 300 is newly connected to the DU 200 that is the upper level node, the upper level IF unit 310 transmits the function identification information that indicates the functions installed in the RU 300 to the DU 200. At this time, the upper level IF unit 310 transmits, together with the function identification information, the verification completion information that indicates the test item in which verification has already been completed related to the RU 300 and profile information that indicates the version of the profile handled by the RU 300. Furthermore, the upper level IF unit 310 receives various kinds of information from the DU 200.

The processor 320 includes, for example, a CPU, an FPGA, a DSP, or the like, and performs overall control of the RU 300. Specifically, the processor 320 includes a function control unit 321.

If the RU 300 is connected to the DU 200 that is the upper level node, the function control unit 321 reads the function identification information, the verification completion information, and the profile information related to the RU 300 from the memory 330 and causes the upper level IF unit 310 to transmit the read information from the upper level IF unit 310 to the DU 200. Furthermore, if the function control unit 321 receives an instruction to enable or disable the function from the DU 200, the function control unit 321 enables or disables the function of the RU 300 in accordance with the instruction.

Furthermore, if the function control unit 321 receives an instruction to update the profile from the DU 200, the function control unit 321 updates the profile of the RU 300. Furthermore, at the time of conducting the test related to the function of the RU 300 to be enabled, the function control unit 321 conducts an operation test in accordance with the instruction received from the DU 200. Then, after the test related to the function of the RU 300 has been conducted, if information indicating that it has been confirmed that the function is normally performed is notified from the DU 200, the function control unit 321 causes the memory 330 to store information indicating that verification of the test item related to the subject function has been completed as the verification completion information.

The memory 330 includes, for example, a RAM, a ROM, or the like, and stores information that is used for a process performed by the processor 320.

The wireless communication unit 340 performs wireless communication with the terminal device 400. In other words, the wireless communication unit 340 wirelessly transmits the signal that is addressed to the terminal device 400 and that is output from the processor 320 to the terminal device 400 via an antenna. Furthermore, the wireless communication unit 340 wirelessly receives, via the antenna, the signal transmitted from the terminal device 400, and then, outputs the reception signal to the processor 320.

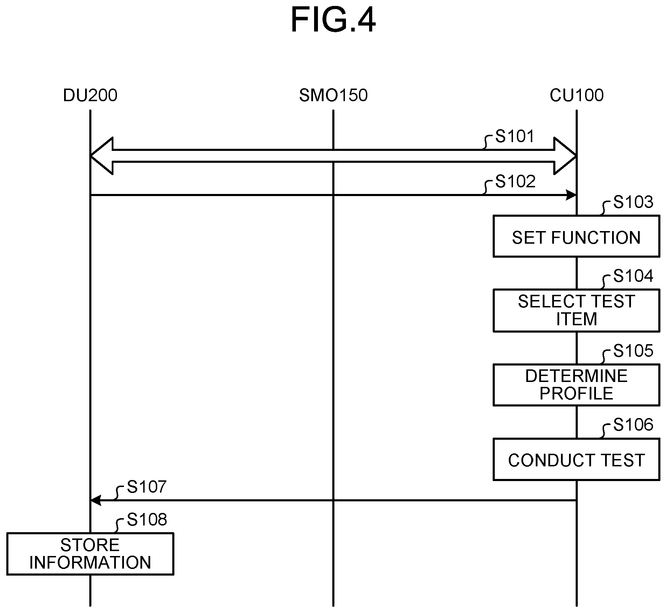

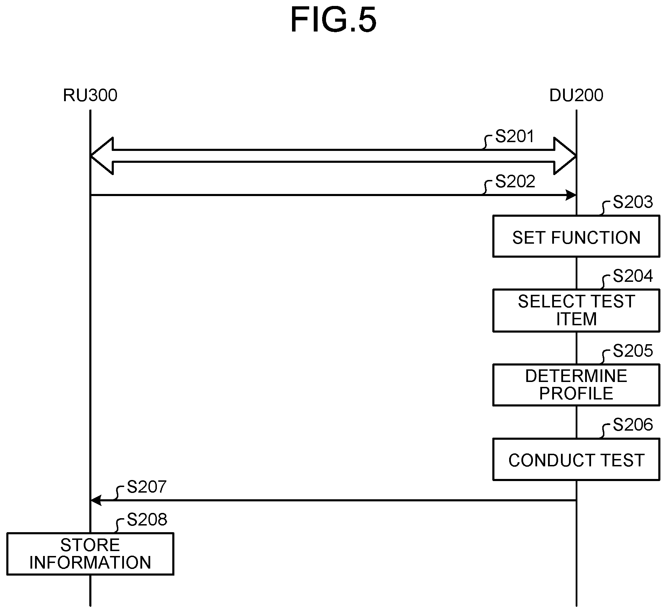

In the following, a device addition method used in the communication system configured as described above will be described with reference to FIGS. 4 and 5. FIG. 4 is a sequence diagram illustrating the device addition method used at the time at which the DU 200 is added to the lower level of the CU 100.

When the DU 200 that is the lower level node is added, the DU 200 is physically connected to the CU 100 (Step S101). Then, the function identification information, the verification completion information, and the profile information related to the DU 200 are read from the memory 230 by the function control unit 221 included in the DU 200, and are transmitted from the upper level IF unit 210 to the CU 100 (Step S102). The function identification information, the verification completion information, and the profile information are received by the lower level IF unit 110 included in the CU 100 that is the upper level node.

Then, enabling and disabling of the functions of the DU 200 are set by the function control unit 121 included in the CU 100 on the basis of the function identification information on the DU 200 (Step S103). Specifically, the functions of the CU 100 and the functions of the DU 200 are compared, and it is decided to enable the function supported by the CU 100 out of the functions supported by the DU 200, whereas it is decided to disable the function that is not supported by the CU 100 out of the functions supported by the DU 200. Setting of the function of the DU 200 to be enabled and the disabled is notified to the DU 200 via the lower level IF unit 110, and each of the functions of the DU 200 is enabled or disabled by the function control unit 221 included in the DU 200.

Furthermore, a test item that is conducted in order to verify the function enabled by the test control unit 123 included in the CU 100 is selected (Step S104). Specifically, on the basis of the verification completion information transmitted from the DU 200, the test item in which verification has not been completed out of the test items used for verifying the function to be enabled in the DU 200 is selected. At this time, regarding the test item that is likely to be operated under the condition that is different from that used at the time of conducted test even regarding the test item in which verification has been completed, the test item is selected as the test item to be conducted.

Then, whether or not a change of the profile is needed is determined on the basis of the profile information by the profile control unit 122 included in the CU 100 (Step S105). Specifically, the version of the profile of the CU 100 is compared to the version of the profile of the DU 200, and, if the versions of the profiles of both of the nodes match, it is determined that a change of the profile is not needed. Furthermore, it is also determined that a change of the profile is not needed in the case where the version of the profile of the DU 200 is the version in which backward compatibility with respect to the profile of the CU 100 is guaranteed.

In contrast, if the version of the profile of the DU 200 is the version in which the backward compatibility with respect to the profile of the CU 100 is not guaranteed, it is determined that a change of the profile of the DU 200 or the CU 100 is needed. If it is determined that a change of the profile is needed, an update of the profile is instructed to the DU 200 by the profile control unit 122, or, the profile of the CU 100 is updated. As a result, compatibility of the profile of the CU 100 and the profile of the DU 200 is guaranteed.

Furthermore, in the profile that is related to each of the CU 100 and the DU 200 and in which the compatibility has been guaranteed, each of the set values may be adjusted for each test item in accordance with the condition conceivable at the time of actual operation performed in the CU 100 and the DU 200.

Then, the test related to the selected test item is conducted by the test control unit 123 (Step S106). In other words, a needed operation test including transmission and reception of the signal between the CU 100 and the DU 200 is conducted for each selected test item, it is verified whether or not the function to be enabled in the DU 200 is normally operated. If it is verified that the function of the DU 200 is normally operated, it is possible to start a service that uses this function.

The test result of the function of the DU 200 is notified from the lower level IF unit 110 to the DU 200 (Step S107). In other words, the test result indicating whether the function that is to be enabled is normally operated in the DU 200 is notified to the DU 200. At this time, the setting of enabling and disabling the functions of the DU 200 decided at Step S103 described above may also be notified to the DU 200 together with the test result.

Then, regarding the test item related to the normally operating function, the verification completion information indicating that the verification has been completed is stored in the memory 230 by the test control unit 223 included in the DU 200 (Step S108). At the same time, information on the function that has been enabled in the DU 200, the version of the profile, and the like may be stored in the memory 230. After these pieces of information have been stored, the function may be enabled in the DU 200 and the service that uses the function in which a normal operation has been verified may be automatically started.

In this way, if the DU 200 that is the lower level node is physically connected to the CU 100 that is the upper level node, the function identification information on the DU 200 is transmitted to the CU 100, enabling and disabling of the functions of the DU 200 are set by the CU 100, and an operation test of the function that is to be enabled is conducted. As a result, at the time at which the DU 200 is added, verification of the connection between the CU 100 and the DU 200 is efficiently performed, and it is thus possible to reduce the cost at the time of connecting a device.

FIG. 5 is a sequence diagram illustrating a device addition method at the time at which the RU 300 is added to the lower level of the DU 200.

When the RU 300 that is the lower level node is added, the RU 300 is physically connected to the DU 200 (Step S201). Then, the function identification information, the verification completion information, and the profile information related to the RU 300 are read from the memory 330 by the function control unit 321 included in the RU 300, and are transmitted from the upper level IF unit 310 to the DU 200 (Step S202). The function identification information, the verification completion information, and the profile information are received by the lower level IF unit 240 included in the DU 200 that is the upper level node.

Then, enabling and disabling of the functions of the RU 300 are set by the function control unit 221 included in the DU 200 on the basis of the function identification information on the RU 300 (Step S203). Specifically, the functions of the DU 200 and the function of the RU 300 are compared, and it is decided to enable the function supported by the DU 200 out of the functions supported by the RU 300, whereas it is decided to disable the function that is not supported by the DU 200 out of the functions supported by the RU 300. The setting of enabling and disabling the function of the RU 300 is notified to the RU 300 via the lower level IF unit 240, and each of the functions of the RU 300 is enabled or disabled by the function control unit 321 included in the RU 300.

Furthermore, a test item that is conducted in order to verify the function enabled by the test control unit 223 included in the DU 200 is selected (Step S204). Specifically, on the basis of the verification completion information transmitted from the RU 300, the test item in which verification has not been completed out of the test items used for verifying the function to be enabled in the RU 300 is selected. At this time, regarding the test item that is likely to be operated under the condition that is different from that used at the time of conducted test even regarding the test item in which verification has been completed, the test item is selected as the test item to be conducted.

Then, whether or not a change of the profile is needed is determined on the basis of the profile information by the profile control unit 222 included in the DU 200 (Step S205). Specifically, the version of the profile of the DU 200 is compared to the version of the profile of the RU 300, and, if the versions of the profiles of both of the nodes match, it is determined that a change of the profile is not needed. Furthermore, it is also determined that a change of the profile is not needed in the case where the version of the profile of the RU 300 is the version in which backward compatibility with respect to the profile of the DU 200 is guaranteed.

In contrast, if the version of the profile of the RU 300 is the version in which the backward compatibility with respect to the profile of the DU 200 is not guaranteed, it is determined that a change of the profile of the RU 300 or the DU 200 is needed. If it is determined that a change of the profile is needed, an update of the profile is instructed to the RU 300 by the profile control unit 222, or, the profile of the DU 200 is updated. As a result, the compatibility of the profile of the DU 200 and the profile of the RU 300 is guaranteed.

Furthermore, in the profile that is related to each of the DU 200 and the RU 300 and in which the compatibility has been guaranteed, each of the set values may be adjusted for each test item in accordance with the condition conceivable at the time of actual operation in the DU 200 and the RU 300.

Then, the test related to the selected test item is conducted by the test control unit 223 (Step S206). In other words, a needed operation test including transmission and reception of a signal between the DU 200 and the RU 300 is conducted for each selected test item, it is verified whether or not the function to be enabled in the RU 300 is normally operated. If it is verified that the function of the RU 300 is normally operated, it is possible to start a service that uses this function.

The test result of the function of the RU 300 is notified from the lower level IF unit 240 to the RU 300 (Step S207). In other words, the test result indicating whether the function that is to be enabled is normally operated in the RU 300 is notified to the RU 300. At this time, the setting of enabling and disabling the functions of the RU 300 decided at Step S203 described above may also be notified to the RU 300 together with the test result.

Then, regarding the test item related to the normally operating function, the verification completion information indicating that the verification has been completed is stored in the memory 330 by the function control unit 321 included in the RU 300 (Step S208). At the same time, information on the function that has been enabled in the RU 300, the version of the profile, and the like may be stored in the memory 330. After these pieces of information have been stored, the function may be enabled in the RU 300 and the service that uses the function in which a normal operation has been verified may be automatically started.

In this way, if the RU 300 that is the lower level node is physically connected to the DU 200 that is the upper level node, the function identification information on the RU 300 is transmitted to the DU 200, enabling and disabling of the functions of the RU 300 is set by the DU 200, and an operation test of the function that is to be enabled is conducted. As a result, at the time at which the RU 300 is added, verification of the connection between the DU 200 and the RU 300 is efficiently performed, and it is thus possible to reduce a cost at the time of connecting a device.

As described above, according to the present embodiment, when a lower level node is added, the function identification information, the verification completion information, and the profile information related to the lower level node are transmitted to the upper level node, and the upper level node decides, on the basis of the function identification information, the function that is to be enabled in the lower level node that is added. Then, the upper level node selects, on the basis of the verification completion information, the test item that is to be conducted and that is related to the function to be enabled, and conducts, if the compatibility of the profile has been guaranteed from the profile information, the test of the selected test item. As a result, verification of the connection between the upper level node and the lower level node is efficiently performed, and it is thus possible to reduce a cost at the time of connecting a device.

Furthermore, in one embodiment described above, it is assumed that all of the processes are performed by the CU 100 or the DU 200 that is the upper level node and performed by the DU 200 or the RU 300 that is the lower level node; however, at least a part of the process may also be performed by an external device that is connected to each of the nodes. For example, a process of selecting a test item, a process of determining whether or not a change of the profile is needed, a process of controlling an update of the profile, a process of controlling conduct of a test, or the like may be performed by an external device that is connected to the CU 100 or the DU 200 that is the upper level node.

Furthermore, in one embodiment described above, at least a part of the result of the process performed by the CU 100 or the DU 200 that is the upper level node and performed the DU 200 or the RU 300 that is the lower level node may be notified to a maintenance person of each of the devices. In other words, for example, information on determination indicating that a change of the profile is needed may be notified to a maintenance person, or a result of a conducted test may be notified to a maintenance person. In this case, an update of the profile may be performed or a service may be started in accordance with an operation performed by the maintenance person who received the notification.

According to an aspect of an embodiment of the communication system, the communication process device, and the device addition method disclosed in the present application, an advantage is provided in that it is possible to reduce the cost when a device is connected.

## Claims

1. A communication system comprising a first node (100, 200) and a second node (200, 300) that is connected to the first node (100, 200), wherein:
the first node (100, 200) is a central unit, CU, (100) and the second node (200, 300) is a distributed unit, DU (200); or
the first node (100, 200) is a DU (200) and the second node (200, 300) is a remote unit, RU (300),
wherein
the second node (200, 300) includes a transmitter (210, 310) configured to transmit, when the second node (200, 300) is connected to the first node (100, 200), function identification information for identifying functions installed in the second node (200, 300),
the first node (100, 200) includes
a receiver (110, 240) configured to receive the function identification information transmitted from the second node (200, 300), and
a processor (120, 220) that is connected to the receiver, and
the processor (120, 220) is configured to execute a process including
deciding, based on the function identification information, a function to be enabled or disabled out of the functions installed in the second node (200, 300),
selecting at least a test item used for verifying the function that is decided to be enabled,
conducting a test of the selected test item,
notifying a result of the test to the second node (200, 300), and
starting, when obtaining a test result indicating that the function that is decided to be enabled is normally operated, a service that uses the function,
wherein:
for each selected test item, an operation test including transmission and reception of a signal between the first node (100, 200) and the second node (200, 300) is conducted;
the receiver (110, 240) is configured to receive verification completion information indicating a test item for which verification has already been completed in the second node (200, 300); and
the selecting includes selecting, based on the verification completion information, a test item for which verification has not been completed out of test items used for verifying the function that is decided to be enabled.

2. The communication system according to claim 1, wherein
the deciding includes
comparing the functions installed in each of the first node (100, 200) and the second node (200, 300), and
deciding to enable a function supported by both of the nodes.

3. The communication system according to claim 1, wherein the deciding includes deciding to disable a function that is not supported by the first node (100, 200) out of the functions installed in the second node (200, 300).

4. The communication system according to claim 1, wherein
the receiver (110, 240) is configured to receive profile information indicating a version of a profile of the second node (200, 300), and
the process further includes determining, based on the profile information, whether or not a change of a profile of the first node (100, 200) or the second node (200, 300) is needed.

5. The communication system according to claim 4, wherein
the determining includes
comparing the version of the profile of each of the first node (100, 200) and the second node (200, 300), and
determining that, when the versions of the profiles of both of the nodes match, the change of the profile is not needed.

6. The communication system according to claim 4, wherein the determining includes determining that the change of the profile is not needed when the version of the profile of the second node (200, 300) is a version in which backward compatibility with respect to the profile of the first node (100, 200) is guaranteed.

7. The communication system according to claim 4, wherein the process further includes instructing the second node (200, 300) to update the profile when it is determined that the change of the profile is needed.

8. A communication process device, wherein the communication process device is a Central Unit, CU, (100) or a Distributed Unit, DU, (200) as a first node (100, 200), the communication process device comprising:
a receiver (110, 240) configured to receive function identification information for identifying functions installed in a second node (200, 300) connected to the first node (100, 200), wherein:
the first node (100, 200) is the CU (100) and the second node (200, 300) is a DU (200); or
the first node (100, 200) is the DU (200) and the second node (200, 300) is a remote unit, RU (300); and
a processor (120, 220) that is connected to the receiver, wherein the processor (120, 220) is configured to execute a process including
deciding, based on the function identification information, a function to be enabled or disabled out of the functions installed in the second node (200, 300),
selecting at least a test item used for verifying the function that is decided to be enabled,
conducting a test of the selected test item,
notifying a result of the test to the second node (200, 300), and
starting, when obtaining a test result indicating that the function that is decided to be enabled is normally operated, a service that uses the function,
wherein:
for each selected test item, an operation test including transmission and reception of a signal between the first node (100, 200) and the second node (200, 300) is conducted,
the receiver (110, 240) is configured to receive verification completion information indicating a test item for which verification has already been completed in the second node (200, 300), and
the selecting includes selecting, based on the verification completion information, a test item for which verification has not been completed out of test items used for verifying the function that is decided to be enabled.

## Patentansprüche

1. Kommunikationssystem, umfassend einen ersten Knoten (100, 200) und einen zweiten Knoten (200, 300), der mit dem ersten Knoten (100, 200) verbunden ist, wobei:
der erste Knoten (100, 200) eine zentrale Einheit (CU) (100) ist und der zweite Knoten (200, 300) eine verteilte Einheit (DU) (200) ist; oder
der erste Knoten (100, 200) eine DU (200) ist und der zweite Knoten (200, 300) eine entfernte Einheit (RU) (300) ist,
wobei
der zweite Knoten (200, 300) einen Sender (210, 310) beinhaltet, der konfiguriert ist, um, wenn der zweite Knoten (200, 300) mit dem ersten Knoten (100, 200) verbunden ist, Funktionsidentifikationsinformationen zum Identifizieren von in dem zweiten Knoten (200, 300) installierten Funktionen zu senden,
der erste Knoten (100, 200) Folgendes beinhaltet
einen Empfänger (110, 240), der konfiguriert ist, um die von dem zweiten Knoten (200, 300) gesendeten Funktionsidentifikationsinformation zu empfangen, und
einen Prozessor (120, 220), der mit dem Empfänger verbunden ist, und
der Prozessor (120, 220) konfiguriert ist, um ein Verfahren auszuführen, das Folgendes beinhaltet
Entscheiden für eine zu aktivierende oder deaktivierende Funktion aus den in dem zweiten Knoten (200, 300) installierten Funktionen basierend auf den Funktionsidentifikationsinformationen,
Auswählen mindestens eines Prüfgegenstands, der zum Verifizieren der Funktion verwendet wird, die zu aktivieren entschieden wird,
Durchführen einer Prüfung des ausgewählten Prüfgegenstands,
Mitteilen eines Ergebnisses der Prüfung an den zweiten Knoten (200, 300) und,
wenn ein Prüfungsergebnis erlangt wird, das anzeigt, dass die Funktion, die zu aktivieren entschieden wird, normal betrieben wird, Starten eines Dienstes, der diese Funktion verwendet,
wobei:
für jeden ausgewählten Prüfgegenstand eine Betriebsprüfung durchgeführt wird, die eine Sendung und einen Empfang eines Signals zwischen dem ersten Knoten (100, 200) und dem zweiten Knoten (200, 300) beinhaltet;
der Empfänger (110, 240) konfiguriert ist, um Verifizierungsabschlussinformationen zu empfangen, die einen Prüfgegenstand anzeigen, für den die Verifizierung in dem zweiten Knoten (200, 300) bereits abgeschlossen wurde; und
das Auswählen basierend auf den Verifizierungsabschlussinformationen ein Auswählen eines Prüfgegenstands beinhaltet, für den die Verifizierung nicht abgeschlossen wurde, aus Prüfgegenständen, die zum Verifizieren der Funktion verwendet werden, die zu aktivieren entschieden wird.

2. Kommunikationssystem nach Anspruch 1, wobei das Entscheiden Folgendes beinhaltet
Vergleichen der Funktionen, die in jedem des ersten Knotens (100, 200) und des zweiten Knotens (200, 300) installiert sind, und
Entscheiden, eine Funktion zu aktivieren, die von beiden der Knotenpunkte unterstützt wird.

3. Kommunikationssystem nach Anspruch 1, wobei das Entscheiden ein Entscheiden beinhaltet, eine Funktion, die von dem ersten Knoten (100, 200) nicht unterstützt wird, aus den in dem zweiten Knoten (200, 300) installierten Funktionen zu deaktivieren.

4. Kommunikationssystem nach Anspruch 1, wobei
der Empfänger (110, 240) konfiguriert ist, um Profilinformationen zu empfangen, die eine Version eines Profils des zweiten Knotens (200, 300) anzeigen, und
das Verfahren ferner ein Bestimmen basierend auf den Profilinformationen beinhaltet, ob eine Änderung eines Profils des ersten Knotens (100, 200) oder des zweiten Knotens (200, 300) erforderlich ist oder nicht.

5. Kommunikationssystem nach Anspruch 4, wobei
das Bestimmen Folgendes beinhaltet
Vergleichen der Version des Profils jedes des ersten Knotens (100, 200) und des zweiten Knotens (200, 300) und
Bestimmen, dass, wenn die Versionen der Profile von beiden der Knoten übereinstimmen, die Änderung des Profils nicht erforderlich ist.

6. Kommunikationssystem nach Anspruch 4, wobei das Bestimmen ein Bestimmen beinhaltet, dass die Änderung des Profils nicht erforderlich ist, wenn die Version des Profils des zweiten Knotens (200, 300) eine Version ist, in der Rückwärtskompatibilität in Bezug auf das Profil des ersten Knotens (100, 200) garantiert ist.

7. Kommunikationssystem nach Anspruch 4, wobei das Verfahren ferner ein Anweisen des zweiten Knotens (200, 300) beinhaltet, das Profil zu aktualisieren, wenn bestimmt wird, dass die Änderung des Profils erforderlich ist.

8. Kommunikationsverfahrensvorrichtung, wobei die Kommunikationsverfahrensvorrichtung eine Zentraleinheit (CU) (100) oder eine verteilte Einheit (DU) (200) als ein erster Knoten (100, 200) ist, wobei die Kommunikationsverfahrensvorrichtung Folgendes umfasst:
einen Empfänger (110, 240), der konfiguriert ist, um Funktionsidentifikationsinformationen zum Identifizieren von Funktionen zu empfangen, die in einem zweiten Knoten (200, 300) installiert sind, der mit dem ersten Knoten (100, 200) verbunden ist, wobei:
der erste Knoten (100, 200) die CU (100) ist und der zweite Knoten (200, 300) eine DU (200) ist; oder
der erste Knoten (100, 200) die DU (200) ist und der zweite Knoten (200, 300) eine entfernte Einheit (RU) (300) ist; und
einen Prozessor (120, 220), der mit dem Empfänger verbunden ist, wobei der Prozessor (120, 220) konfiguriert ist, um ein Verfahren auszuführen, der Folgendes beinhaltet
Entscheiden für eine zu aktivierende oder deaktivierende Funktion aus den in dem zweiten Knoten (200, 300) installierten Funktionen basierend auf den Funktionsidentifikationsinformationen,
Auswählen mindestens eines Prüfgegenstands, der zum Verifizieren der Funktion verwendet wird, die zu aktivieren entschieden wird,
Durchführen einer Prüfung des ausgewählten Prüfgegenstands,
Mitteilen eines Ergebnisses der Prüfung an den zweiten Knoten (200, 300) und,
wenn ein Prüfungsergebnis erlangt wird, das anzeigt, dass die Funktion, die zu aktivieren entschieden wird, normal betrieben wird, Starten eines Dienstes, der diese Funktion verwendet,
wobei:
für jeden ausgewählten Prüfgegenstand eine Betriebsprüfung durchgeführt wird, die eine Sendung und einen Empfang eines Signals zwischen dem ersten Knoten (100, 200) und dem zweiten Knoten (200, 300) beinhaltet,
der Empfänger (110, 240) konfiguriert ist, um Verifizierungsabschlussinformationen zu empfangen, die einen Prüfgegenstand anzeigen, für den die Verifizierung in dem zweiten Knoten (200, 300) bereits abgeschlossen wurde, und
das Auswählen basierend auf den Verifizierungsabschlussinformationen ein Auswählen eines Prüfgegenstands beinhaltet, für den die Verifizierung nicht abgeschlossen wurde, aus Prüfgegenständen, die zum Verifizieren der Funktion verwendet werden, die zu aktivieren entschieden wird.

## Revendications

1. Système de communication comprenant un premier nœud (100, 200) et un second nœud (200, 300) connecté au premier nœud (100, 200), dans lequel :
le premier nœud (100, 200) est une unité centrale, CU, (100) et le second nœud (200, 300) est une unité distribuée, DU (200) ; ou
le premier nœud (100, 200) est une DU (200) et le second nœud (200, 300) est une unité distante, RU, (300),
dans lequel
le second nœud (200, 300) comporte un émetteur (210, 310) configuré pour transmettre, lorsque le second nœud (200, 300) est connecté au premier nœud (100, 200), des informations d'identification de fonction pour l'identification de fonctions installées dans le second nœud (200, 300),
le premier nœud (100, 200) comporte
un récepteur (110, 240) configuré pour recevoir les informations d'identification de fonction transmises du second nœud (200, 300), et
un processeur (120, 220) qui est connecté au récepteur, et
le processeur (120, 220) est configuré pour exécuter un processus comportant
la décision, sur la base des informations d'identification de fonction, d'activer ou de désactiver une fonction parmi les fonctions installées dans le second nœud (200, 300),
la sélection d'au moins un élément de test utilisé pour la vérification de la fonction qu'il est décidé d'activer,
la réalisation d'un test de l'élément de test sélectionné,
la notification d'un résultat du test au second nœud (200, 300), et
le démarrage, lors de l'obtention d'un résultat de test indiquant que la fonction qu'il est décidé d'activer fonctionne normalement, d'un service qui utilise la fonction,
dans lequel :
pour chaque élément de test sélectionné, un test de fonctionnement comportant la transmission et la réception d'un signal entre le premier nœud (100, 200) et le second nœud (200, 300) est réalisé ;
le récepteur (110, 240) est configuré pour recevoir des informations d'achèvement de vérification indiquant un élément de test pour lequel la vérification a déjà été terminée dans le second nœud (200, 300) ; et
la sélection comporte la sélection, sur la base des informations d'achèvement de vérification, d'un élément de test pour lequel la vérification n'a pas été terminée parmi les éléments de test utilisés pour la vérification de la fonction qu'il est décidé d'activer.

2. Système de communication selon la revendication 1, dans lequel la décision comporte
la comparaison des fonctions installées dans chacun du premier nœud (100, 200) et du second nœud (200, 300), et
la décision d'activer une fonction prise en charge par les deux nœuds.

3. Système de communication selon la revendication 1, dans lequel la décision comporte la décision de désactiver une fonction qui n'est pas prise en charge par le premier nœud (100, 200) parmi les fonctions installées dans le second nœud (200, 300) .

4. Système de communication selon la revendication 1, dans lequel
le récepteur (110, 240) est configuré pour recevoir des informations de profil indiquant une version d'un profil du second nœud (200, 300), et
le processus comporte également la détermination, sur la base des informations de profil, si un changement d'un profil du premier nœud (100, 200) ou du second nœud (200, 300) est nécessaire ou non.

5. Système de communication selon la revendication **4,** dans lequel
la détermination comporte
la comparaison de la version du profil de chacun du premier nœud (100, 200) et du second nœud (200, 300), et
la détermination que, lorsque les versions des profils des deux nœuds correspondent, le changement du profil n'est pas nécessaire.

6. Système de communication selon la revendication 4, dans lequel la détermination comporte la détermination que le changement du profil n'est pas nécessaire lorsque la version du profil du second nœud (200, 300) est une version dans laquelle la rétrocompatibilité par rapport au profil du premier nœud (100, 200) est garantie.

7. Système de communication selon la revendication 4, dans lequel le processus comporte également l'instruction au second nœud (200, 300) de mettre à jour le profil lorsqu'il est déterminé que le changement du profil est nécessaire.

8. Dispositif de processus de communication, dans lequel le dispositif de processus de communication est une unité centrale, CU, (100) ou une unité distribuée, DU, (200) en tant que premier nœud (100, 200), le dispositif de processus de communication comprenant :
un récepteur (110, 240) configuré pour recevoir des informations d'identification de fonction pour l'identification de fonctions installées dans un second nœud (200, 300) connecté au premier nœud (100, 200), dans lequel :
le premier nœud (100, 200) est la CU (100) et le second nœud (200, 300) est une DU (200) ; ou
le premier nœud (100, 200) est la DU (200) et le second nœud (200, 300) est une unité distante, RU, (300) ; et
un processeur (120, 220) qui est connecté au récepteur, dans lequel le processeur (120, 220) est configuré pour exécuter un processus comportant
la décision, sur la base des informations d'identification de fonction, d'activer ou de désactiver une fonction parmi les fonctions installées dans le second nœud (200, 300),
la sélection d'au moins un élément de test utilisé pour la vérification de la fonction qu'il est décidé d'activer,
la réalisation d'un test de l'élément de test sélectionné,
la notification d'un résultat du test au second nœud (200, 300), et
le démarrage, lors de l'obtention d'un résultat de test indiquant que la fonction qu'il est décidé d'activer fonctionne normalement, d'un service qui utilise la fonction,
dans lequel :
pour chaque élément de test sélectionné, un test de fonctionnement comportant la transmission et la réception d'un signal entre le premier nœud (100, 200) et le second nœud (200, 300) est réalisé,
le récepteur (110, 240) est configuré pour recevoir des informations d'achèvement de vérification indiquant un élément de test pour lequel la vérification a déjà été terminée dans le second nœud (200, 300), et
la sélection comporte la sélection, sur la base des informations d'achèvement de vérification, d'un élément de test pour lequel la vérification n'a pas été terminée parmi les éléments de test utilisés pour la vérification de la fonction qu'il est décidé d'activer.
